# EUROPÄISCHE PATENTANMELDUNG

(11) **EP 2 996 311 A1**
(43) Veröffentlichungstag der Anmeldung: **16.03.2016**
(21) Anmeldenummer: 14184781.4
(22) Anmeldetag: 15.09.2014
(51) Int. Cl.: H04L 29/12, G05B 19/418, H04L 29/08

(54) **Verfahren zur Bereitstellung von Informationen über Kommunikationsgerätenamen innerhalb eines industriellen Automatisierungssystems und Kommunikationsgerät**

(71) Anmelder: Siemens Aktiengesellschaft, 80333 München (DE)
(72) Erfinder: Albrecht, Harald, 90475 Nürnberg (DE)

(57) **Zusammenfassung**

Zur Bereitstellung von Informationen über Kommunikationsgerätenamen innerhalb eines industriellen Automatisierungssystems wird bei einer Zuweisung bzw. Änderung eines Gerätenamens eines Kommunikationsgeräts ein Datagramm mit einer Aktualisierungsanforderung zur Zuordnung seiner Kommunikationsnetzadresse zum geänderten oder zugewiesenen Gerätenamen insbesondere an ausgewählte Kommunikationsgeräte verbreitet. Die ausgewählten Kommunikationsgeräte erzeugen oder ändern auf die Aktualisierungsanforderung jeweils einen dem Kommunikationsgerät mit dem geänderten oder zugewiesenen Gerätenamen zugeordneten Datensatz in ihrer jeweiligen Datenbank. Dabei umfasst der Datensatz die Zuordnung der Kommunikationsnetzadresse zum Gerätenamen.

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Aus der älteren europäischen Patentanmeldung mit dem Anmeldeaktenzeichen 14166194.2 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen. Vorteilhafterweise kann das beschriebene Verfahren zur Konfiguration eines Kommunikationsgeräts in Ethernet-Kommunikationsnetzen ohne IP-Subnetzbildung angewendet werden. Insbesondere sind dabei keine IP-Router zur Bildung von Domänengrenzen erforderlich.

Die ältere europäische Patentanmeldung mit dem Anmeldeaktenzeichen 14166376.5 betrifft ein Verfahren zur Bereitstellung eines Namensdienstes innerhalb eines industriellen Kommunikationssystems, bei dem IPv6-Präfixe durch Router mittels Nachrichten mit Router-Bekanntgaben (Router Advertisements) in jeweils unterlagerten Teilnetzen verbreitet werden. Die Router-Bekanntgaben umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte, also Kommunikationsgeräte ohne Routing-Funktionen, selbständig ihren Gerätenamen. Hierdurch wird eine einfache Inbetriebnahme von Serienmaschinen ermöglicht, da aufgrund oben genannter automatischer Vervollständigung lediglich auf Maschinenebene eindeutige Namen auszuwählen sind.

In der älteren europäischen Patentanmeldung mit dem Anmeldeaktenzeichen 14182111.6 ist ein Verfahren zur Ermittlung von Kommunikationsgerätenamen innerhalb eines industriellen Automatisierungssystems beschrieben, bei dem mittels einer Diagnoseeinheit Konfigurationsdaten eines ausgewählten Kommunikationsgeräts abgefragt werden, dessen Kommunikationsgerätename zu ermitteln ist. Dabei umfassen die Konfigurationsdaten einen Geräteidentifikator und eine Kommunikationsnetzadresse des ausgewählten Kommunikationsgeräts sowie eine Kommunikationsnetzadresse und einen Teilnetzidentifikator einer lokalen Konfigurationseinheit. Die Diagnoseeinheit übermittelt anhand der abgefragten Konfigurationsdaten ein Datagramm zur Namensabfrage an eine Diagnosedatenbereitstellungseinheit, die dem das ausgewählte Kommunikationsgerät umfassenden Teilnetz zugeordnet ist. Anhand des Geräteidentifikators bzw. der Kommunikationsnetzadresse des ausgewählten Kommunikationsgeräts löst die Diagnosedatenbereitstellungseinheit eine inverse Adressauflösungsabfrage aus. Dadurch wird die Kommunikationsnetzadresse des ausgewählten Kommunikationsgeräts auf dessen Kommunikationsgerätenamen abgebildet. Dies ermöglicht eine schnelle und zuverlässige Ermittlung von Kommunikationsgerätenamen.

Bei einer Inbetriebnahme oder Überwachung von Automatisierungsgeräten kann es erforderlich sein, alle Automatisierungsgeräte innerhalb eines Subnetzes einschließlich sämtlicher Kommunikationsnetzadressen zu ermitteln, die den Automatisierungsgeräten zugeordnet sind. Insbesondere in IPv6-basierten Kommunikationsnetzen ist Kommunikationsgeräten üblicherweise jeweils eine Vielzahl Kommunikationsadressen zugeordnet, die beispielsweise Link-lokal (link-local address), lokal eindeutig (unique local address) oder global eindeutig (global unique address) sein können. Für einen Zugriff eines Engineering-Systems, Diagnosewerkszeugs oder Inbetriebnahmeprogramms auf ein Automatisierungsgerät ist es wichtig, kontextabhängig eine jeweils geeignete Adressinformation bereitzustellen.

Durch dynamisches DNS (Domain Name System) können Domänennamen in Domain-Name-Systemen automatisch aktualisiert werden, wenn für einen Rechner nach Änderung seiner IP-Adresse im wesentlichen umgehend eine Anpassung seines zugeordneten Domäneneintrag im Domain-Name-System veranlasst wird. Damit ist ein Rechner immer unter demselben Domänennamen erreichbar. Entsprechend dynamischem DNS über HTTP oder HTTPS wird ein Domänenname bei einem DDNS-Anbieter registriert, der automatisch die jeweils aktuelle IP-Adresse zum Domänennamen zuordnet. Sobald ein Rechner eine Änderung seiner oder einer durch ihn überwachten IP-Adresse erkennt, übermittelt er über eine HTTP- oder HTTPS-Schnittstelle eine Änderungsbenachrichtigung an den DDNS-Anbieter. Hierzu ist eine Authentifizierung mittels Benutzername und Passwort gegenüber dem DDNS-Anbieter erforderlich.

In RFC 2136 ist ein als DNS Update bekanntes Verfahren für dynamisches DNS spezifiziert, bei dem ein Master-Nameserver empfangene Dynamic Update Requests während einer Sammelphase lediglich zwischenspeichert, bevor er zugeordnete Einträge in seiner Zonendatei aktualisiert. Eine solche Sammelphase kann mehrere Minuten dauern, so dass dynamische Aktualisierungen nicht sofort an etwaige Slave-Nameserver weitergegeben werden, die eine Kopie der Zonendatei verwalten.

Der vorliegenden Erfindung liegt die Aufgabe zugrunde, ein Verfahren zur dezentralen und Router-übergreifend einsetzbaren Bereitstellung von Informationen über Kommunikationsgerätenamen innerhalb eines industriellen Automatisierungssystems zu schaffen sowie eine geeignete Vorrichtung zu dessen Durchführung anzugeben.

Diese Aufgabe wird erfindungsgemäß durch ein Verfahren mit den in Anspruch 1 angegebenen Merkmalen und durch ein Kommunikationsgerät mit den in Anspruch 10 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Bereitstellung von Informationen über Kommunikationsgerätenamen verbreiten im wesentlichen sämtliche Kommunikationsgeräte innerhalb eines industriellen Automatisierungssystem mittels ihrer jeweiligen Namensdienstkomponente Datagramme mit Informationen über Zuordnungen zwischen Gerätenamen und Kommunikationsnetzadressen entsprechend einem Namensauflösungsprotokoll. Die Kommunikationsgeräte verbreiten die Informationen über Zuordnungen zwischen Gerätenamen und Kommunikationsnetzadressen mittels ihrer jeweiligen Namensdienstkomponente vorzugsweise dezentral und konfigurationslos, beispielsweise entsprechend Multicast DNS Protokoll als Namensauflösungsprotokoll.

Erfindungsgemäß aggregieren zumindest ausgewählte Kommunikationsgeräte mittels ihrer jeweiligen Namensdienstkomponente empfangene Informationen über Zuordnungen zwischen Gerätenamen und Kommunikationsnetzadressen jeweils in einer Datenbank zur Beantwortung von Namensauflösungsanfragen. Dabei basieren die aggregierten Informationen auf den entsprechend dem Namensauflösungsprotokoll verbreiteten Informationen über Zuordnungen zwischen Gerätenamen und Kommunikationsnetzadressen. Bei einer Zuweisung bzw. Änderung eines Gerätenamens eines Kommunikationsgeräts wird ein Datagramm mit einer Aktualisierungsanforderung zur Zuordnung seiner zumindest einen Kommunikationsnetzadresse zum geänderten oder zugewiesenen Gerätenamen verbreitet. Auf die Aktualisierungsanforderung erzeugen oder ändern die ausgewählten Kommunikationsgeräte jeweils einen dem Kommunikationsgerät mit dem geänderten oder zugewiesenen Gerätenamen zugeordneten Datensatz in ihrer jeweiligen Datenbank. Dieser Datensatz umfasst die Zuordnung der Kommunikationsnetzadresse zum Gerätenamen.

Mit dem erfindungsgemäßen Verfahren wird eine Aktualisierungsfunktion für ein dezentral organisiertes Namenssystem realisiert, die sich relativ einfach in bestehende Namenssysteme integrieren lässt. Zudem erlaubt das erfindungsgemäße Verfahren einen Rückgriff auf IP-basierte Kommunikationsprotokolle für eine Zuordnung von Gerätenamen. Im Vergleich zu Sicherungsschicht-basierten Verfahren ermöglicht dies eine problemlose Verwendbarkeit über Routergrenzen hinweg.

Entsprechend einer vorteilhaften Ausgestaltung des erfindungsgemäßen Verfahrens wird auf die Aktualisierungsanforderung jeweils ein dem Kommunikationsgerät mit dem geänderten oder zugewiesenen Gerätenamen zugeordneter Pointer Ressource Record erzeugt oder geändert. Alternativ dazu kann auf die Aktualisierungsanforderung jeweils ein dem Kommunikationsgerät mit dem geänderten oder zugewiesenen Gerätenamen zugeordneter A Ressource Record oder AAAA Ressource Record erzeugt oder geändert werden. Entsprechend einer weiteren alternativen Ausgestaltung der vorliegenden Erfindung kann auf die Aktualisierungsanforderung jeweils ein dem Kommunikationsgerät mit dem geänderten oder zugewiesenen Gerätenamen zugeordneter CNAME Ressource Record erzeugt werden. Dabei umfasst der CNAME Ressource Record eine Bezeichnung von bisherigem und neuem Gerätenamen. Dies ermöglicht eine besonders einfache und schnelle Erfassung neuer oder geänderter Gerätenamen. Der jeweilige Ressource Record kann beispielsweise im Rahmen eines Zonentransfers für das jeweilige ausgewählte Kommunikationsgerät erzeugt oder geändert werden. In diesem Fall wird durch den Zonentransfer eine die Datenbank zur Beantwortung von Namensauflösungsanfragen umfassende Zonendatei des jeweiligen ausgewählten Kommunikationsgeräts aktualisiert.

Vorzugsweise werden die Datagramme mit Informationen über Zuordnungen zwischen Gerätenamen und Kommunikationsnetzadressen jeweils als Antwort auf eine Namensauflösungsanfrage durch ein Kommunikationsgerät verbreitet, dessen Kommunikationsnetzadresse einer in der Namensauflösungsanfrage angegebenen Kommunikationsnetzadresse entspricht. Entsprechend einer besonders bevorzugten Ausgestaltung der vorliegenden Erfindung erzeugen oder ändern die ausgewählten Kommunikationsgeräte auf die Aktualisierungsanforderung den dem Kommunikationsgerät mit dem geänderten oder zugewiesenen Gerätenamen zugeordneten Datensatz jeweils nur dann, wenn sich das Kommunikationsgerät mit dem geänderten oder zugewiesenen Gerätenamen in einem für eine Geräteumbenennung zulässigen Zustand befindet. Dies ermöglicht eine konsistente und zuverlässige Registrierung neuer oder geänderter Gerätenamen. Ein für eine Geräteumbenennung zulässiger Zustand ist in einem industriellen Automatisierungssystem beispielsweise gegeben, wenn ein Programm einer zugeordneten speicherprogrammierbaren Steuerung oder ein Programm entsprechend PROFINET-Protokoll abläuft.

Das erfindungsgemäße Kommunikationsgerät für ein industrielles Automatisierungssystem zur Durchführung eines Verfahrens entsprechend vorangehenden Ausführungen umfasst eine Namensdienstkomponente zur Verbreitung von Datagrammen mit Informationen über Zuordnungen zwischen Gerätename und zumindest einer Kommunikationsnetzadresse des Kommunikationsgeräts entsprechend einem Namensauflösungsprotokoll. Dabei ist die Namensdienstkomponente dazu ausgestaltet und eingerichtet, empfangene Informationen über Zuordnungen zwischen Gerätenamen und Kommunikationsnetzadressen in einer Datenbank zur Beantwortung von Namensauflösungsanfragen aggregieren. Dabei basieren die aggregierten Informationen auf den entsprechend dem Namensauflösungsprotokoll verbreiteten Informationen über Zuordnungen zwischen Gerätenamen und Kommunikationsnetzadressen. Außerdem ist die Namensdienstkomponente dazu ausgestaltet und eingerichtet, bei einer Zuweisung bzw. Änderung des Gerätenamens ein Datagramm mit einer Aktualisierungsanforderung zur Zuordnung seiner Kommunikationsnetzadresse zum geänderten oder zugewiesenen Gerätenamen zu verbreiten. Darüber hinaus ist die Namensdienstkomponente dazu ausgestaltet und eingerichtet, auf eine Aktualisierungsanforderung eines anderen Kommunikationsgeräts jeweils einen zugeordneten Datensatz in der Datenbank zu erzeugen oder zu ändern. Dabei umfasst der Datensatz die Zuordnung der Kommunikationsnetzadresse zum Gerätenamen des anderen Kommunikationsgeräts.

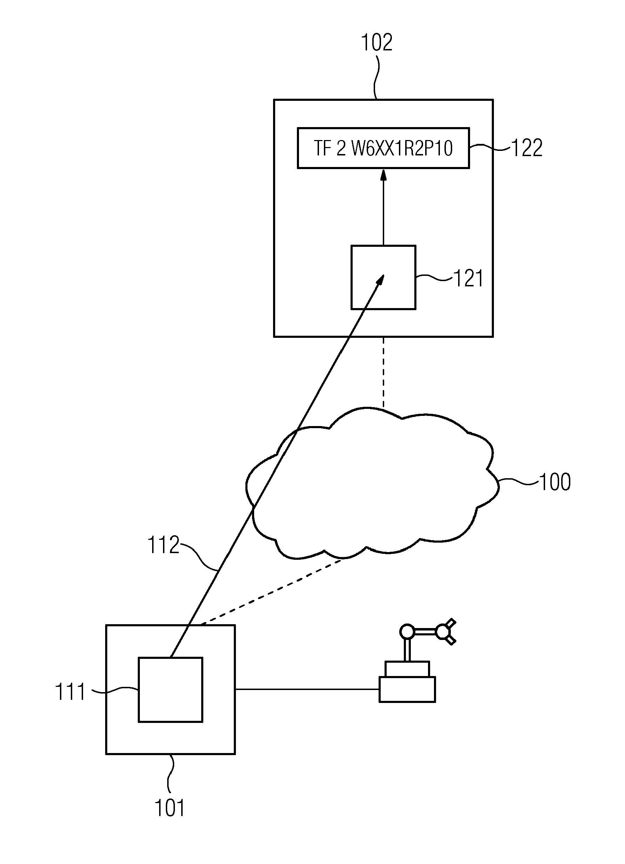

Die vorliegende Erfindung wird nahfolgend an einem Ausführungsbeispiel anhand der Zeichnung näher beschrieben. Es zeigt die
- Figur: ein industrielles Kommunikationsnetz mit einem dezentralen Namensdienst-Server und einem Kommunikationsgerät mit neuem oder geänderten Gerätenamen.

An das in der Figur dargestellte Kommunikationsnetz 100 sind exemplarisch ein dezentraler Namensdienst-Server 102 und ein Kommunikationsgerät 101 angeschlossen, dessen Gerätename neu oder geändert ist. Das Kommunikationsgerät 101 mit dem neuen bzw. geänderten Gerätenamen kann beispielsweise einem industriellen Automatisierungsgerät, wie einer Speicherprogrammierbaren Steuerung oder einem Feldgerät, zugeordnet oder in ein industrielles Automatisierungsgerät integriert sein, so dass durch den Gerätenamen auch das jeweilige industrielle Automatisierungsgerät charakterisiert werden kann.

Ebenso wie sämtliche Kommunikationsgeräte innerhalb des industriellen Kommunikationsnetzes 100 umfasst das Kommunikationsgerät 101 mit dem neuen bzw. geänderten Gerätenamen im vorliegenden Ausführungsbeispiel eine Namensdienstkomponente 111, mittels der das Kommunikationsgerät 101 Informationen über Zuordnungen zwischen Gerätenamen und Kommunikationsnetzadressen entsprechend Multicast DNS Protokoll als Namensauflösungsprotokoll verbreitet. Die Datagramme mit Informationen über Zuordnungen zwischen Gerätenamen und Kommunikationsnetzadressen werden vorzugsweise jeweils als Antwort auf eine Namensauflösungsanfrage durch ein Kommunikationsgerät verbreitet, dessen Kommunikationsnetzadresse einer in der Namensauflösungsanfrage angegebenen Kommunikationsnetzadresse entspricht. Auf diese Weise werden die Informationen über Zuordnungen zwischen Gerätenamen und Kommunikationsnetzadressen mittels der jeweiligen Namensdienstkomponente dezentral und konfigurationslos verbreitet. Bei einer Zuweisung bzw. Änderung eines Gerätenamens eines Kommunikationsgeräts wird ein Datagramm mit einer Aktualisierungsanforderung 112 zur Zuordnung seiner Kommunikationsnetzadresse zum geänderten oder zugewiesenen Gerätenamen verbreitet.

Der dezentrale Namensdienst-Server 102 ist beispielsweise einem ausgewählten Kommunikationsgerät innerhalb eines industriellen Automatisierungssystems zugeordnet und dafür vorgesehen, empfangene Informationen über Zuordnungen zwischen Gerätenamen und Kommunikationsnetzadressen mittels seiner Namensdienstkomponente 121 in einer Datenbank 122 zur Beantwortung von Namensauflösungsanfragen zu aggregieren. Dabei basieren die aggregierten Informationen auf den entsprechend dem Namensauflösungsprotokoll verbreiteten Informationen über Zuordnungen zwischen Gerätenamen und Kommunikationsnetzadressen. Darüber hinaus ist die Namensdienstkomponente 121 des dezentralen Namensdienst-Servers 102 dazu ausgestaltet und eingerichtet, auf eine Aktualisierungsanforderung 112 eines anderen Kommunikationsgeräts 101 jeweils einen zugeordneten Datensatz in der Datenbank 122 zu erzeugen oder zu ändern. Dabei umfasst der Datensatz die Zuordnung der Kommunikationsnetzadresse zum Gerätenamen des anderen Kommunikationsgeräts 101.

Entsprechend einer ersten Variante eines aktualisierbaren dezentral organisierten Namensdienstes wird auf die Aktualisierungsanforderung 112 jeweils ein dem Kommunikationsgerät 101 mit dem geänderten oder zugewiesenen Gerätenamen zugeordneter Pointer Ressource Record erzeugt oder geändert. Alternativ dazu kann auf die Aktualisierungsanforderung jeweils ein dem Kommunikationsgerät 101 mit dem geänderten oder zugewiesenen Gerätenamen zugeordneter A Ressource Record für IPv4-Adressen oder AAAA Ressource Record für IPv6-Adressen erzeugt oder geändert werden. Entsprechend einer weiteren alternativen Variante wird auf die Aktualisierungsanforderung jeweils ein dem Kommunikationsgerät 101 mit dem geänderten oder zugewiesenen Gerätenamen zugeordneter CNAME Ressource Record für eine Zuordnung kanonischer Namen erzeugt. Dabei umfasst der CNAME Ressource Record eine Bezeichnung von bisherigem und neuem Gerätenamen.

Bei allen Varianten wird der jeweilige Ressource Record im Rahmen eines Zonentransfers für den dezentralen Namensdienst-Server 102 erzeugt oder geändert. Durch den Zonentransfer wird eine die Datenbank 122 zur Beantwortung von Namensauflösungsanfragen umfassende Zonendatei des dezentralen Namensdienst-Servers 102 aktualisiert.

Im vorliegenden Ausführungsbeispiel erzeugt oder ändert ein dezentraler Namensdienst-Server auf eine Aktualisierungsanforderung nur dann einen dem Kommunikationsgerät mit dem geänderten oder zugewiesenen Gerätenamen zugeordneten Datensatz, wenn sich das Kommunikationsgerät mit dem geänderten oder zugewiesenen Gerätenamen in einem für eine Geräteumbenennung zulässigen Zustand befindet. Auf diese Weise können Inkonsistenzen aufgrund unzulässigerweise verbreiteter Namensinformationen vermieden werden.

## Patentansprüche

1. Verfahren zur Bereitstellung von Informationen über Kommunikationsgerätenamen innerhalb eines industriellen Automatisierungssystems, bei dem
- im wesentlichen sämtliche Kommunikationsgeräte innerhalb des industriellen Automatisierungssystem mittels ihrer jeweiligen Namensdienstkomponente Datagramme mit Informationen über Zuordnungen zwischen Gerätenamen und Kommunikationsnetzadressen entsprechend einem Namensauflösungsprotokoll verbreiten,
- zumindest ausgewählte Kommunikationsgeräte mittels ihrer jeweiligen Namensdienstkomponente empfangene Informationen über Zuordnungen zwischen Gerätenamen und Kommunikationsnetzadressen jeweils in einer Datenbank zur Beantwortung von Namensauflösungsanfragen aggregieren, wobei die aggregierten Informationen auf den entsprechend dem Namensauflösungsprotokoll verbreiteten Informationen über Zuordnungen zwischen Gerätenamen und Kommunikationsnetzadressen basieren,
- bei einer Zuweisung und/oder Änderung eines Gerätenamens eines Kommunikationsgeräts ein Datagramm mit einer Aktualisierungsanforderung zur Zuordnung seiner zumindest einen Kommunikationsnetzadresse zum geänderten oder zugewiesenen Gerätenamen verbreitet wird,
- die ausgewählten Kommunikationsgeräte auf die Aktualisierungsanforderung jeweils einen dem Kommunikationsgerät mit dem geänderten oder zugewiesenen Gerätenamen zugeordneten Datensatz in ihrer jeweiligen Datenbank erzeugen oder ändern, wobei der Datensatz die Zuordnung der Kommunikationsnetzadresse zum Gerätenamen umfasst.

2. Verfahren nach Anspruch 1,
bei dem die Kommunikationsgeräte die Informationen über Zuordnungen zwischen Gerätenamen und Kommunikationsnetzadressen mittels ihrer jeweiligen Namensdienstkomponente dezentral und konfigurationslos verbreiten.

3. Verfahren nach Anspruch 2,
bei dem die Informationen über Zuordnungen zwischen Gerätenamen und Kommunikationsnetzadressen entsprechend Multicast DNS Protokoll als Namensauflösungsprotokoll verbreitet werden.

4. Verfahren nach Anspruch 3,
bei dem auf die Aktualisierungsanforderung jeweils ein dem Kommunikationsgerät mit dem geänderten oder zugewiesenen Gerätenamen zugeordneter Pointer Ressource Record erzeugt oder geändert wird.

5. Verfahren nach Anspruch 3,
bei dem auf die Aktualisierungsanforderung jeweils ein dem Kommunikationsgerät mit dem geänderten oder zugewiesenen Gerätenamen zugeordneter A Ressource Record oder AAAA Ressource Record erzeugt oder geändert wird.

6. Verfahren nach Anspruch 3,
bei dem auf die Aktualisierungsanforderung jeweils ein dem Kommunikationsgerät mit dem geänderten oder zugewiesenen Gerätenamen zugeordneter CNAME Ressource Record erzeugt wird, wobei der CNAME Ressource Record eine Bezeichnung von bisherigem und neuem Gerätenamen umfasst.

7. Verfahren nach einem der Ansprüche 4 bis 6,
bei dem der jeweilige Ressource Record im Rahmen eines Zonentransfers für das jeweilige ausgewählte Kommunikationsgerät erzeugt oder geändert wird, wobei durch den Zonentransfer eine die Datenbank zur Beantwortung von Namensauflösungsanfragen umfassende Zonendatei des jeweiligen ausgewählten Kommunikationsgeräts aktualisiert wird.

8. Verfahren nach einem der Ansprüche 1 bis 7,
bei dem die Datagramme mit Informationen über Zuordnungen zwischen Gerätenamen und Kommunikationsnetzadressen jeweils als Antwort auf eine Namensauflösungsanfrage durch ein Kommunikationsgerät verbreitet werden, dessen Kommunikationsnetzadresse einer in der Namensauflösungsanfrage angegebenen Kommunikationsnetzadresse entspricht.

9. Verfahren nach einem der Ansprüche 1 bis 8,
bei dem die ausgewählten Kommunikationsgeräte auf die Aktualisierungsanforderung den dem Kommunikationsgerät mit dem geänderten oder zugewiesenen Gerätenamen zugeordneten Datensatz jeweils nur dann erzeugen oder ändern, wenn sich das Kommunikationsgerät mit dem geänderten oder zugewiesenen Gerätenamen in einem für eine Geräteumbenennung zulässigen Zustand befindet.

10. Kommunikationsgerät für ein industrielles Automatisierungssystem zur Durchführung des Verfahrens nach einem der Ansprüche 1 bis 9 mit
- einer Namensdienstkomponente zur Verbreitung von Datagrammen mit Informationen über Zuordnungen zwischen Gerätename und zumindest einer Kommunikationsnetzadresse des Kommunikationsgeräts entsprechend einem Namensauflösungsprotokoll,
- wobei die Namensdienstkomponente dazu ausgestaltet und eingerichtet ist,
- empfangene Informationen über Zuordnungen zwischen Gerätenamen und Kommunikationsnetzadressen in einer Datenbank zur Beantwortung von Namensauflösungsanfragen aggregieren, wobei die aggregierten Informationen auf den entsprechend dem Namensauflösungsprotokoll verbreiteten Informationen über Zuordnungen zwischen Gerätenamen und Kommunikationsnetzadressen basieren,
- bei einer Zuweisung und/oder Änderung des Gerätenamens ein Datagramm mit einer Aktualisierungsanforderung zur Zuordnung seiner Kommunikationsnetzadresse zum geänderten oder zugewiesenen Gerätenamen zu verbreiten,
- auf eine Aktualisierungsanforderung eines anderen Kommunikationsgeräts jeweils einen zugeordneten Datensatz in der Datenbank zu erzeugen oder zu ändern, wobei der Datensatz die Zuordnung der Kommunikationsnetzadresse zum Gerätenamen des anderen Kommunikationsgeräts umfasst.
